# EUROPEAN PATENT SPECIFICATION

(11) **EP 1 464 217 B1**
(45) Date of publication and mention of the grant of the patent: **02.07.2008**
(21) Application number: 04250354.0
(22) Date of filing: 23.01.2004
(51) Int. Cl.: A01G 9/02

(54) **Flower ornamental assembly**
Zierblumenanordnung
Assemblage pour fleurs ornementales

(30) Priority: 10.03.2003 JP 2003063448
(43) Date of publication of application: 06.10.2004
(73) Proprietor: Ito, Takami, Ibaraki-shi, Osaka (JP)
(72) Inventor: Ito, Takami, Ibaraki-shi, Osaka (JP)
(74) Representative: Mackenzie, Andrew Bryan

(56) References cited:
- US-A- 1 877 098
- US-A- 4 635 394
- US-A- 5 199 213

## Description

### BACKGROUND OF THE INVENTION

### 1. Field of the Invention

The present invention relates to a flower ornamental assembly for accommodating a flowerpot planting flowers.

### 2. Description of the Related Art

Hitherto, various members have been known as the flower ornamental assemblys accommodating flowerpots. For example, a flower ornamental assembly has a flower ornament pot, and a flowerpot is put in the opening formed in the upper end of the main body. In this kind of flower ornamental assembly, the flowerpot is decorated by making various designs in the flower ornament pot, and the flowerpot is supported at a desired height at the same time. The flower ornamental assembly is installed by burying the lower part of the flower ornament pot in the ground.

A flowerpot stand is composed of a cylindrical member for accommodating a flowerpot and plural plates arranged in layers and forming a circular hole for receiving the cylindrical member (see, for example, Japanese laid-open patent publication No. HEI 11-266706). In other flowerpot support stand, the stability is improved by lowering the center of gravity of the stand by placing a steel plate at the lower end of a pedestal for erecting and supporting a post on which a pot holder is mounted (see, for example, Japanese laid-open utility model publication No. SHO 61-108164).

In the above conventional flower ornamental assembly, although the lower part of the flower ornament pot is buried in the ground, the heavy object of flowerpot is accommodated in the upper part of the flower ornament pot.. This causes the center of gravity of the flower ornamental assembly to be high, and thus, when an external force is applied to the flower ornament pot, the flower ornamental assembly may sway and tumble. Besides, since the lower part of the flower ornament pot is buried in the ground, the entire appearance of the decoratively designed flower ornament pot is not visible, and the excellent appearance of the pot is not fully exhibited. The flowerpot stand disclosed in Japanese laid-open patent publication No. HEI 11-266706 is not fixed in the ground, thus being liable to tilting or positional deviation. The flowerpot support stand disclosed in Japanese laid-open utility model publication No. SHO 61-108164 is not designed to decorate the flowerpot, and the appearance is not excellent.

US Patent 1,877,098 describes a plant stand having a supporting base and a plant support separated by a stem consisting of a rod with screw threads at either end. The plant support is arranged to receive a plant pot in order that the plant can be supported in a raised position compared with other plants not placed on the plant stand. However, the configuration of the plant stand leads to a high centre of gravity meaning that, as discussed with respect to Japanese laid-open patent publication No HEI 11-266706, when an external force is applied to a flower pot on the stand the flower pot is liable to sway and tumble.

US Patent 5,199,213 describes a pot container which is held at an upper terminal end of a support rod. The lower terminal end of the support rod is attached to a pedestal support. A plant pot can be placed within the pot container and rests upon the base of the container. As with both US Patent 1,877,098 and Japanese laid-open patent publication No HEI 11-266706 the arrangement has a high centre of gravity and therefore is unstable.

US Patent 4,635,394 describes a plant container adapted to be supported above a base means by a support means which extends downwardly from the container and is anchored in the base mean. The plant container then receives host soil and a plant. It is not used to support a flower or plant pot.

### SUMMARY OF THE INVENTION

The present invention is devised to solve the problems of the prior arts, and it is hence an object thereof to present a flower ornamental assembly free from tilting and excellent in appearance.

As aspect of the present invention provides a flower ornamental assembly as claimed in Claim 1. The flower ornamental assembly is adapted to receive a flower pot in which flowers are planted , the flower ornamental assembly comprising: a support post having a lower part buried in the ground or fixed to the ground with a fixing device so as to be erected upward; a flower ornament pot having at the upper end an opening for accommodating the flowerpot an having at the lower end a through-hole through which the support post is inserted; the flower pot resting on the opening of and being in contact with the flower ornamental pot and a tilt preventative member placed around the support post inserted through the through-hole into the flower ornament pot, for cooperating with the support post to erect and support the flower ornament pot.

In this configuration, the flower ornament pot is erected and supported by the support post and the tilt preventive member, and sway, tilt or positional deviation of the flower ornamental assembly can be prevented. Besides, since the tilt preventive member is placed in the flower ornament pot, the center of gravity of the flower ornament pot can be lowered, and the stability of the flower ornament pot can be enhanced. Further, the flower ornament pot is formed like pot, and it can be designed freely in shape, pattern, color, etc.

Preferably, the tilt preventive member includes a block body having a through-hole for penetrating the support post in the vertical direction, placed around the support post inside the flower ornament pot, and defining the inclination of the flower ornament pot within a specified range, and a buffer member filling a space between the block body, the flower ornament pot, and the support post. In this configuration, when an external force is applied to the flower ornament pot, the buffer member absorbs the external force. If a greater external force not observed by the buffer member is applied, the inclination of the flower ornament pot can be restricted by the block body, so that sway or tilt of the flower ornamental assembly can be prevented.

In one embodiment, the flower ornamental assembly further comprises a height adjusting piece interposed between the flower ornament pot and the ground for adjusting a height position of the flower ornament pot. In this configuration, the flower ornament pot can be adjusted to a desired height position by the height adjusting piece.

In one embodiment, the flower ornamental assembly further comprises a pedestal integrally fitted to the lower end of the flower ornament pot, wherein the pedestal has a hollow space communicating with the through-hole of the flower ornament pot for inserting the support post. In this configuration, by providing the flower ornament pot with the pedestal, the flower ornament pot and the pedestal can be integrally erected and supported by the support post.

Another aspect of the present invention provides a flower ornamental assembly for accommodating a flowerpot planting flowers or directly planting flowers, comprising: a support post having a lower part buried in the ground or fixed to the ground with a fixing device so as to be erected upward; and a flower ornament pot having at the upper end an opening for accommodating the flowerpot and having at the lower end a through-hole through which the support post is inserted, wherein the flower ornament pot has a hollow tubular part integrally erected upward from the through-hole, and the flower ornament pot is erected and supported with the support post inserted in the tubular part.

In this configuration, the support post is inserted into the tubular part from the through-hole in the flower ornament pot. The flower ornament pot is erected and supported by the support post and the tubular part, and sway, tilting or positional deviation of the flower ornamental assembly can be prevented. When erecting and supporting the flower ornament pot, it is not always required to place the tilt preventive member, and thus the flower ornament pot can be easily erected and supported.

### BRIEF DESCRIPTION OF THE DRAWINGS

FIG. 1 is a sectional view of structure of a flower ornamental assembly in an embodiment of the present invention.
FIG. 2 shows a mode of flower ornament pot installed on a support post of the member.
FIG. 3 is a sectional view of flower ornamental assembly filled with a filler.
FIG. 4A is a sectional view of the member having a stopper installed on the top of the filler, and FIG. 4B is a perspective view of the stopper.
FIG. 5 is a sectional view of structure of a flower ornamental assembly in another embodiment of the present invention.
FIG. 6 is a perspective view showing a block body used in the member.
FIG. 7 is a sectional view of structure of a flower ornamental assembly in a different embodiment of the present invention.
FIG. 8 is a diagram showing a fixing device for fixing the support post.
FIGS. 9A and 9B are a plan view and a sectional view, respectively, of structure of a flower ornament pot of a flower ornamental assembly in a different embodiment of the present invention.
FIGS. 10A and 10B are drawings explaining a manufacturing method of the flower ornament pot.
FIG. 11 is a sectional view of structure of the flower ornamental assembly.
FIG. 12 is a sectional view of structure of a flower ornamental assembly in a different embodiment of the present invention.
FIG. 13 is a sectional view of structure of a flower ornamental assembly in a different embodiment of the present invention.

### DETAILED DESCRIPTION OF THE EMBODIMENT

### (Embodiment 1)

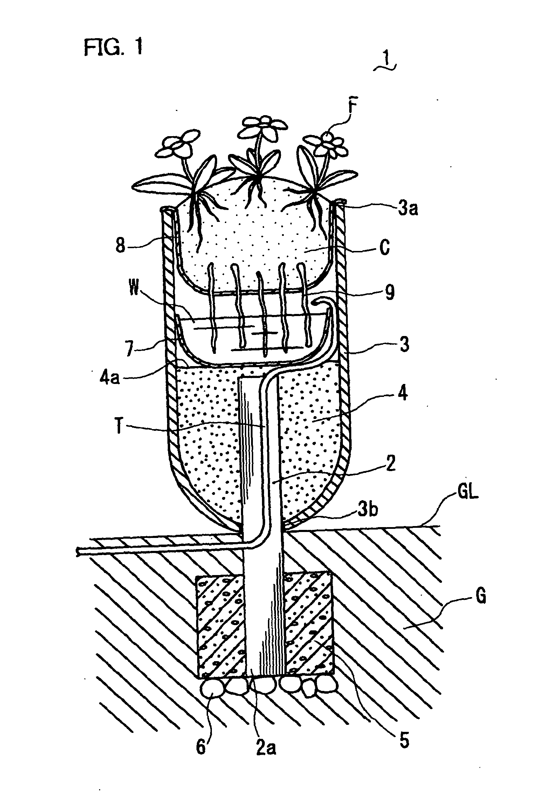

A flower ornamental assembly in an embodiment of the present invention is described by referring to FIGS. 1 to 4. FIG. 1 shows a flower ornamental assembly accommodating a flowerpot plating flowers. A flower ornamental assembly 1 comprises a support post 2 erected upward from the ground level GL, a flower ornament pot 3 accommodating a flowerpot 8, and a filler (tilt preventive member) 4 placed around the support post 2 for preventing sway or tilt of the flower ornament pot 3.

The support post 2 is made of, for example, an iron pipe, and is erected on the ground level GL. The lower part 2a of the support post 2 is coupled with a foundation member 5 formed of concrete or the like, and buried in the ground G paved with pebbles 6, so that the support post 2 stands upright from the ground level GL.

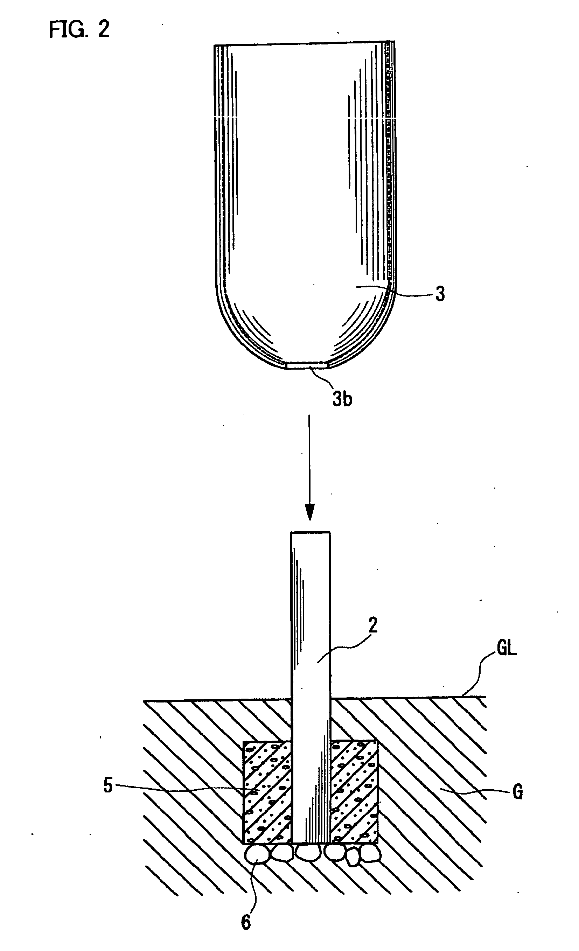

The flower ornament pot 3 is formed like a pot, and it is designed with various shapes, patterns and colors, and the flower pot 8 put in the opening 3a at the upper end is decorated. At the lower end of the flower ornament pot 3, there is a through-hole 3b for penetrating the support post 2. Therefore, as shown in FIG. 2, by inserting the flower ornament pot 3 in the arrow direction by positioning the through-hole at the support post 2, the flower ornament pot 3 is mounted on the support post 2.

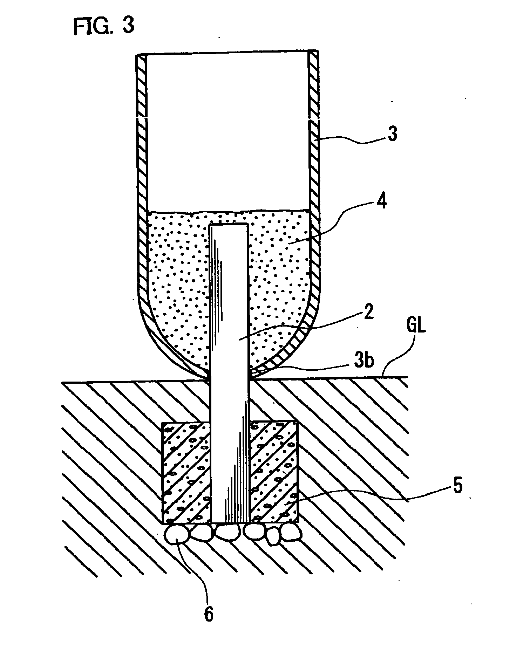

Inside of the flower ornament pot 3, as shown in FIG. 3, a filler 4 made of stones (pebbles), sand, mortar or the like is placed around the support post 2. As a result, the flower ornament pot 3 is erected and supported by the support post 2 and the filler 4, and sway or tilt of the flower ornament pot 3 is prevented.

On the top 4a of the filler 4, there is a water tray 7 for reserving water W to be supplied to the flowerpot 8. The flowerpot 8 is put in the opening 3 a at the upper end of the flower ornament pot 3, and is exchanged as required. The flowerpot 8 is filled with culture soil C, and flowers F are planted on the top. A water absorbing cloth 9 is drooping from the middle of the soil in the culture soil C to the water tray 7. The water absorbing cloth 9 is made of water absorbing material such as nonwoven cloth, and water W is sucked up from the water tray 7 by the capillary action, and water is supplied into the culture soil C. The flowerpot 8 and the water tray 7 may not be necessarily separate members, but a partition board may be provided at a specified height from the bottom of the flowerpot 8, and the lower part below the partition board may be used as the water tray 7.

In the water tray 7, a leading end of an irrigation tube T communicating from the ground G into the flower ornament pot 3 along the support post 2 is inserted, and water is poured into the water tray 7 from the irrigation tube T. The irrigation tube T may be also connected to the flower ornament pot 3 through the inside of the support post 2 from a lateral hole preliminarily formed in the side of the support post 2. Alternatively, the irrigation tube T may be extended to the upper part of the flowerpot 8, and water may be directly poured into the flowerpot 8. Instead of planting the flowers in the flowerpot 8, flowers may be directly planted in the flower ornament pot 3.

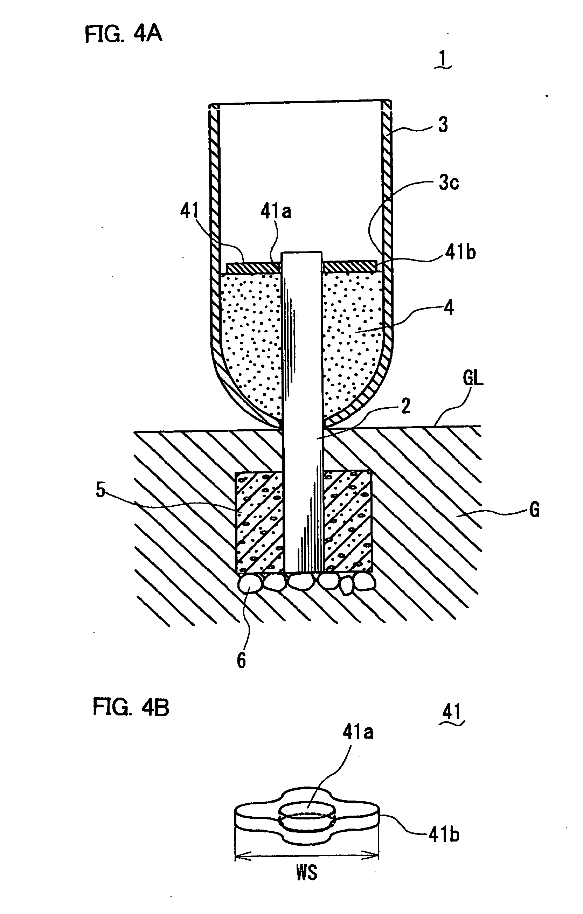

The flower ornamental assembly 1 may be also configured as shown in FIG. 4A, in which the filler is placed to a position slightly lower than the upper end of the support post, and a stopper 41 shown in FIG. 4B may be fitted on. The stopper 41 has a through-hole 41 a for penetrating the support post, and its width WS is slightly smaller (for example, about 2 cm) than the inside diameter of the flower ornament pot 3. As the peripheral edge 41b of the stopper 41 contacts with the inner wall 3c, inclination of the flower ornament pot 3 is limited, and sway or tilt can be prevented.

According to the flower ornamental assembly having such configuration, since the support post 2 is buried in the ground G and the flower ornament pot 3 is erected and supported by the support post 2 and the filler 4, tilt or positional deviation of the flower ornamental assembly 1 can be prevented. Moreover, since the filler 4 is placed into the flower ornament pot 3, the center of gravity of the flower ornament pot 3 can be lowered, and the stability of the flower ornament pot 3 is enhanced. Further, since the flower ornament pot 3 is formed like a pot and the entire structure is exposed above the ground, it is beautiful in appearance by itself. Since the irrigation tube T is disposed inside of the flower ornament pot 3 together with the support post 2, the excellent appearance of the flower ornamental assembly 1 is not spoiled.

### (Embodiment 2)

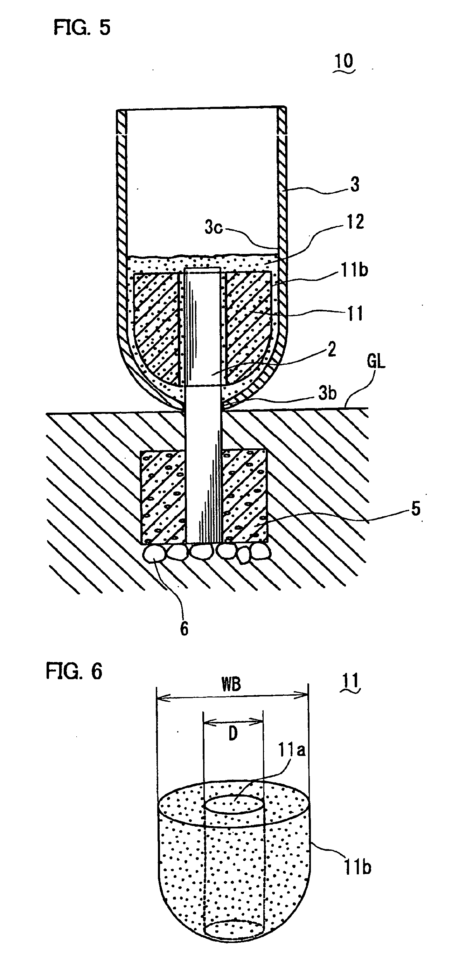

A flower ornamental assembly in another embodiment of the present invention is described by referring to FIGS. 5 and 6. A flower ornamental assembly 10 is different from the flower ornamental assembly 1 in that a flower ornament pot 3 is erected and supported by a block body 11 defining the inclination of the flower ornament pot 3, and a buffer member 12 filling the space around the block body 11 (in FIG. 5, a water tray 7, a flowerpot 8 and others are not shown).

The block body 11 is formed of, for example, concrete or mortar, and has a through-hole 11 a for penetrating the support post 2 in the vertical direction, and is fitted to the support post 2. Diameter D of the through-hole 11 a is slightly larger than the outside diameter of the support post, and when the block body 11 is fitted into the support post 2, a gap is formed between the support post 2 and the block body 11. Width WB of the block body 11 is slightly (for example, about 2 cm) smaller than the inside diameter of the flower ornament pot 3, so that a gap is also formed between the block body 11 and the flower ornament pot 3.

The buffer member 12 is formed of cushioning material such as sand or foamed resin, and is used to fill in the gaps formed between the support post 2 and the block body 11, and between the block body 11 and the flower ornament pot 3 mentioned above. The flower ornament pot 3 is erected and supported by the support post 2, the block body 11, and the buffer member 12, and sway, tilt or breakage of the flower ornament pot 3 can be prevented. That is, when an external force is applied to the flower ornament pot 3 and the flower ornament pot is slightly inclined, the buffer member 12 absorbs the external force applied to the flower ornament pot 3, for preventing breakage of the flower ornament pot 3. At this time, the peripheral edge 11b of the block body 11 does not abut against the inner wall 3c of the flower ornament pot 3, and a slight inclination of the flower ornament pot 3 is allowed. When a large external force is applied to the flower ornament pot 3, and the inclination of the flower ornament pot 3 is increased, the peripheral edge 11b abuts against the inner wall 3c, and the inclination of the flower ornament pot 3 is limited.

According to the flower ornamental assembly 10 having such configuration, since the buffer member 12 absorbs the external force applied to the flower ornament pot 3 and the block body 11 limits the inclination of the flower ornament pot 3, if a large external force is applied to the flower ornament pot 3, breakage, sway or tilt of the flower ornament pot 3 can be prevented.

### (Embodiment 3)

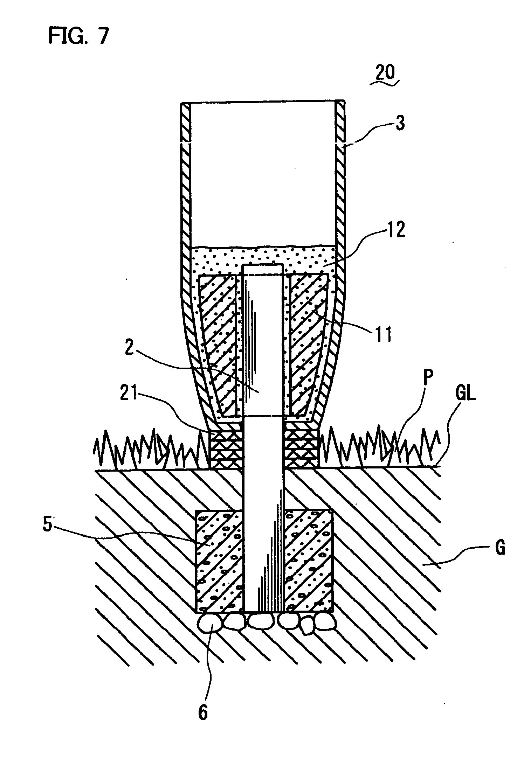

A flower ornamental assembly in a different embodiment of the present invention is explained by referring to FIG. 7. A flower ornamental assembly 20 differs from the flower ornamental assembly 1 or 10 in that a height adjusting piece 21 is disposed for adjusting the height position of the flower ornament pot 3 to the height of the surrounding plants P (in FIG. 7, a water tray 7, a flower pot 8 and others are not shown). The height adjusting piece 21 is interposed between the flower ornament pot 3 and the ground level GL. According to the flower ornamental assembly 20, the height of the flower ornament pot 3 can be adjusted easily by increasing or decreasing the number of height adjusting pieces 21.

### (Embodiment 4)

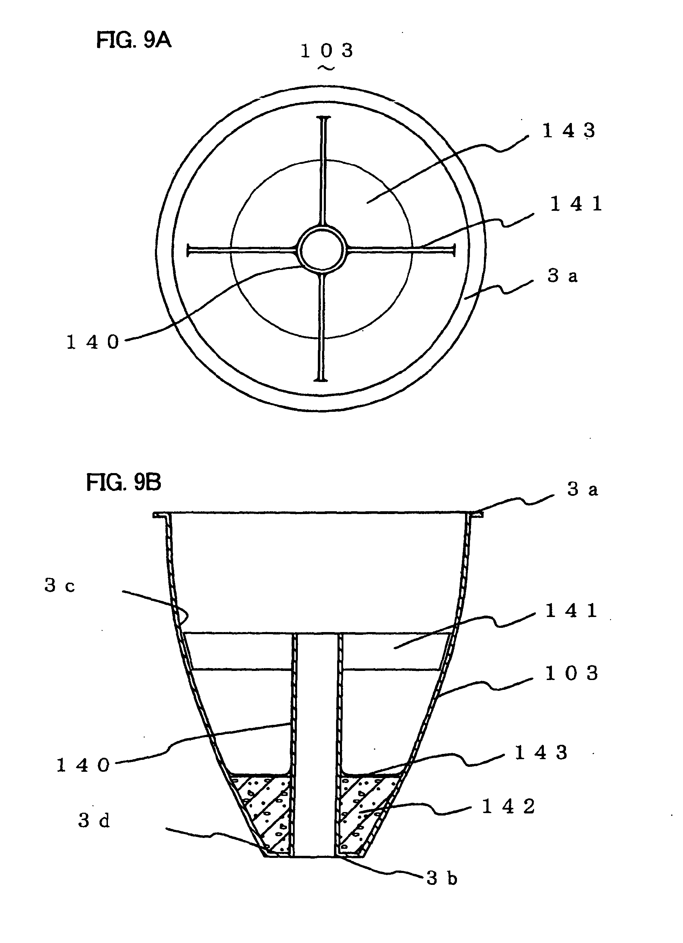

A flower ornamental assembly in a further different embodiment of the present invention is explained by referring to FIGS. 9 to 11. A flower ornament pot 103 includes a flower ornament pot body shaped like a pot and a hollow tubular part 140 formed in an inward central part integrally with the pot body, and is erected and supported by inserting the support post 2 into this tubular part 140. In this embodiment, the tilt preventive member 4 used in the foregoing embodiments is not always required.

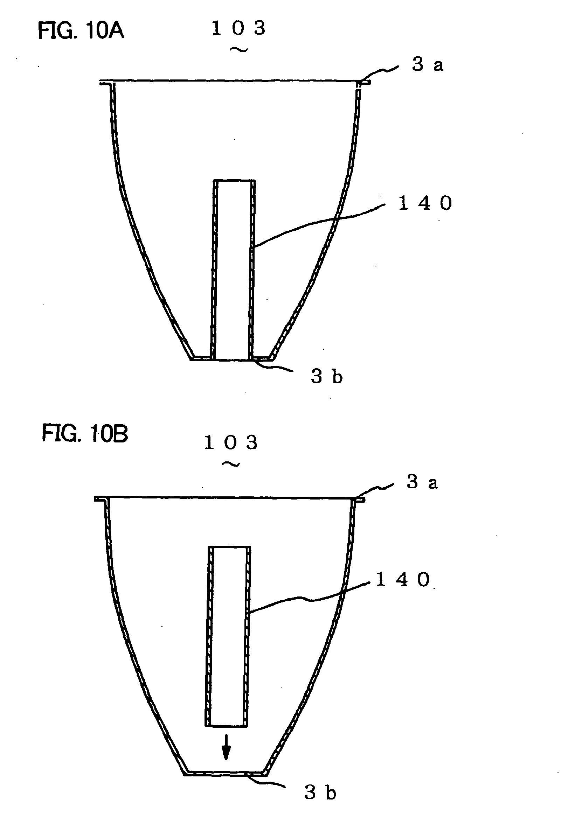

The flower ornament pot 103 is made of, for example, fiber reinforced plastics (FRP), and is formed like a pot having an opening 3a, a through-hole 3b and a tubular part 140 as shown in FIG. 10A. Or, as shown in FIG. 10B, the FRP may be formed like pot having the opening 3a and the through-hole 3b, and the tubular part 140 may be affixed to it.

In this embodiment, for reinforcing the tubular part 140, a rib reinforcement member 141 is provided. The reinforcement member 141 is composed of plural rib plates fixed in radial direction so as to bridge between the tubular part 140 and the inner wall 3c of the flower ornament pot 103. The reinforcement member 141 can enhance the strength of the tubular part 140, so that, if an external force is applied in the installed state of the flower ornamental assembly 100, the flower ornament pot 103 hardly tilts down.

Further in the embodiment, at the lower end 3d of the flower ornament pot 103, a filler 142 of concrete or the like is poured in so as to reinforce the lower end 3d and lower the center of gravity of the main body so as to maintain a stable position, and FRP 143 is applied thereon to solidify. The filler 142 and the FRP 143 may be omitted depending on the situation of use of the flower ornamental assembly 100.

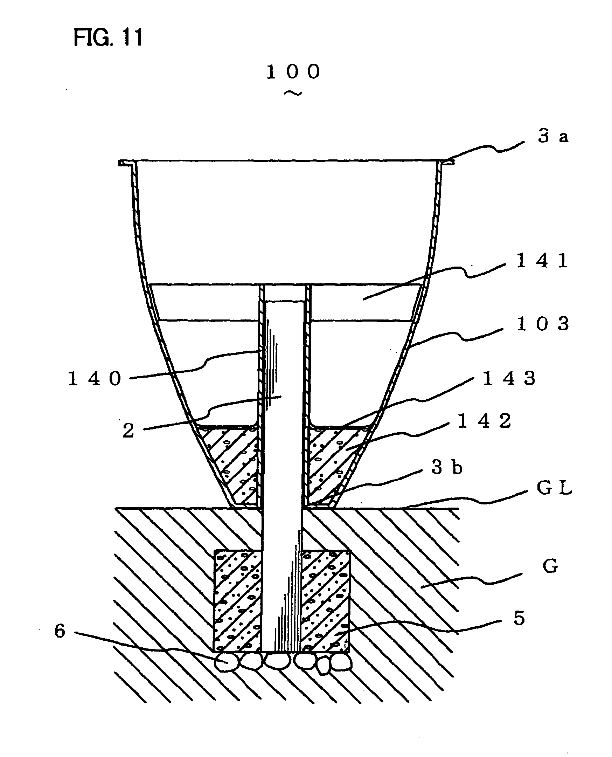

The flower ornament pot 103 is erected by inserting the support post 2 into the tubular part 140 from the through-hole 3b of the flower ornament pot 103 as shown in FIG. 11. Since the flower ornament pot 103 is erected and supported by the support post 2 and the tubular part 140, sway, tilt, or positional deviation of the flower ornamental assembly 100 can be prevented. Further, at the time of installation, it is not necessary to fill or mount the tilt preventive member 4, so that the flower ornamental assembly 100 can be installed simply in a smaller number of steps.

### (Embodiment 5)

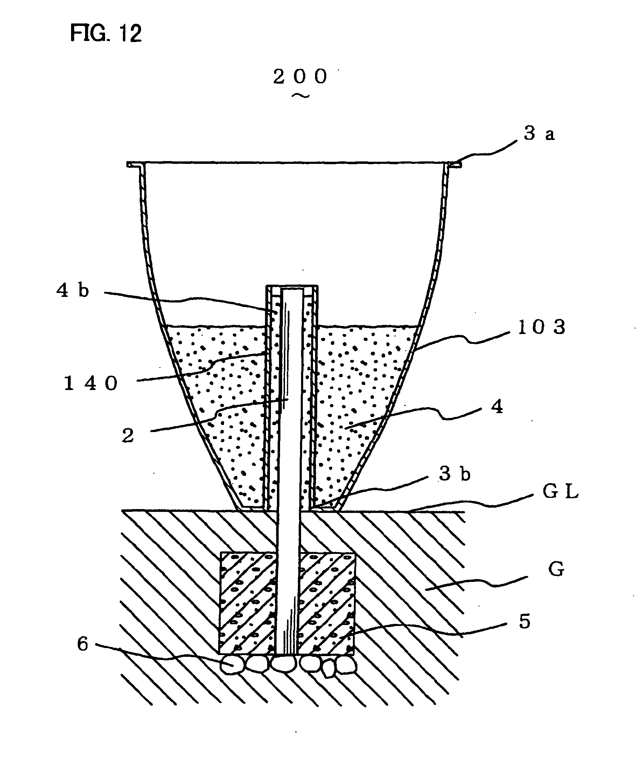

A flower ornamental assembly in a different embodiment of the present invention is explained by referring to FIG. 12. A flower ornament pot 103 of a flower ornamental assembly 200 includes an opening 3a, a through-hole 3b, and a tubular part 140 same as in embodiment 4, but does not have a reinforcement member 141 unlike embodiment 4.

The flower ornament pot 103 is erected and supported by a support post 2 and the tubular part 140 with the support post 2 inserted into the tubular part 140. Accordingly, when installing the flower ornamental assembly 200, it is not always necessary to use a tilt preventive member 4 or the like, but by filling the outer space of the tubular part 140 with the filler 4 inside of the main body 103, the tubular part 140 can be reinforced, and the center of gravity of the flower ornament pot 103 can be lowered, so that the stability of the flower ornament pot 103 can be enhanced.

The outside diameter of the support post 2 and the inside diameter of the tubular part 140 may be properly defined so that the support post 2 may be easily inserted into the tubular part 140. If a gap is formed between the support post 2 and the tubular part 140 when the support post 2 is inserted into the tubular part 140, this gap may be filled with a filler 4b. As a result, the flower ornament pot 103 is supported stably by the support post 2.

### (Embodiment 6)

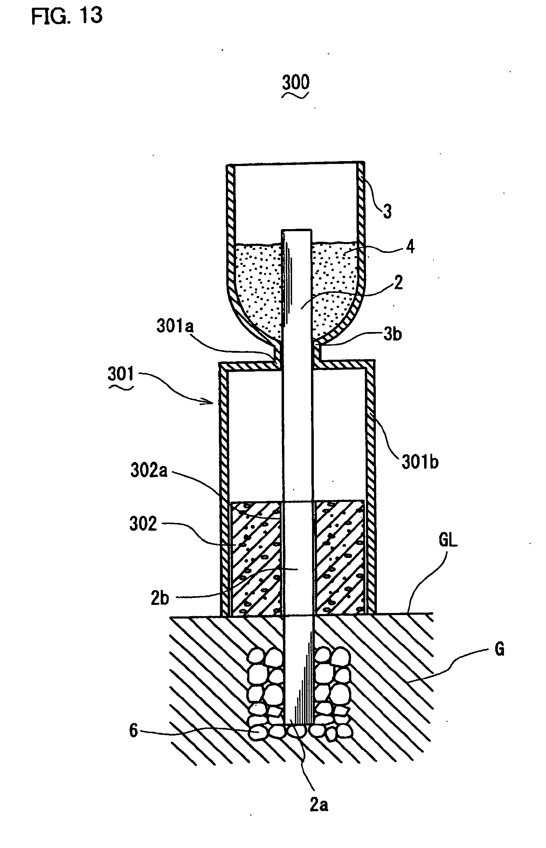

A flower ornamental assembly in a different embodiment of the present invention is explained by referring to FIG. 13. A flower ornamental assembly 300 is different from other embodiments in that a pedestal 301 is integrally fitted to the lower end of a flower ornament pot 3. The pedestal 301 has at the upper surface a communication hole 301a communicating with a through-hole 3b of the flower ornament pot, and has a hollow space for penetrating the support post 2 in its shell 301b. The lower part 2a of the support post 2 is buried in the ground G, and its aboveground part 2b is supported by a support member 302 made of concrete or the like. The flower ornamental assembly 300 has a support member 302 fitted to the support post 2 by way of a through-hole 302a, and is erected by inserting the support post 2 into the flower ornament pot 3 by way of the communication hole 301a and the through-hole 3b. In the flower ornamental assembly 300, since the pedestal 301 is fitted to the flower ornament pot 3, the flower ornament pot 3 and the pedestal 301 are erected and supported integrally by the support post 2 and others. Accordingly, not only the flower ornament pot 3 but also the pedestal 301 can be prevented from sway, tilt or positional deviation.

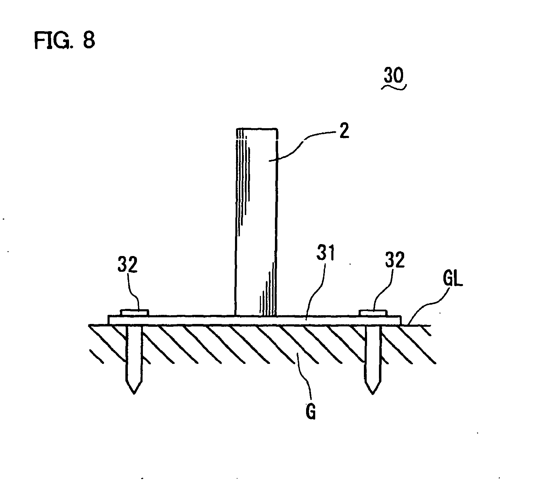

The present invention is not limited to these embodiments, but may be changed and modified in various modes. For example, the support post 2 may not be buried in the ground, but may be fixed on the ground level GL by using a fixing device 30 composed of a support plate 31 for erecting and supporting the support post 2 and piles 32 for fixing the support plate 31 to the ground level as shown in FIG. 8. In this case, the basement for fixing the support plate 31 is not limited to the ground level GL, but may be a decorative table installed separately. The tilt preventive member in the flower ornamental assembly 1 is not limited to the filler 4, but it may be also realized by a member made of synthetic resin or concrete formed in a shape conforming to the inner side of the flower ornament pot 3, and having a through-hole for penetrating the support post 2. The material and the manufacturing method of the flower ornament pot 103 are not limited to the examples of the illustrated embodiments.

## Claims

1. A flower ornamental assembly (1) adapted to receive a flowerpot (8) in which flowers are planted , the flower ornamental assembly comprising:
a support post (2) having a lower part buried in the ground or fixed to the ground with a fixing device so as to be erected upward;
a flower ornament pot (3) having at the upper end an opening (3a) adapted to receive the flowerpot (8) and having at the lower end a through-hole (3b) through which the support post (2) is inserted; **characterized by** the flower pot (8) resting on the opening of and being in contact with the flower ornament pot (3); and
a tilt preventive member (4,11,140) placed in the flower ornament pot (3) around the support post (2) when the support post (2) is inserted through the through-hole (3b) of the flower ornament pot (3) for cooperating with the support post (2) to erect and support the flower ornament pot.

2. The flower ornamental assembly (1) according to claim 1,
wherein the tilt preventive member (4,11,140) is a filler (4) filling a surrounding of the support post (2) inside the flower ornament pot (3).

3. The flower ornamental assembly (1) according to claim 1,
wherein the tilt preventive member (4,11,140) includes: a block body (11) having a through-hole (11a) for penetrating the support post (2) in the vertical direction, placed around the support post (2) inside the flower ornament pot (3), and defining the inclination of the flower ornament pot (3) within a specified range; and a buffer member (12) filling a space between the block body (11), the flower ornament pot (3), and the support post (2).

4. The flower ornamental assembly (1) according to claim 1, further comprising a height adjusting piece (21) interposed between the flower ornament pot (3) and the ground for adjusting a height position of the flower ornament pot (3).

5. The flower ornamental assembly (1) according to claim 1, further comprising a pedestal (301) integrally fitted to the lower end of the flower ornament pot (3),
wherein the pedestal (301) has a hollow space communicating with the through-hole (3b) of the flower ornament pot (3) for inserting the support post (2).

6. The flower ornamental assembly according to claim 1 :
wherein the tilt preventative member (4,11,140) is a hollow tubular part (140) integral to the flower ornament pot (3), the hollow tubular part (140) erected upward from the through-hole (3b), and the flower ornament pot (3) being erected and supported with the support post (2) inserted in the tubular part (140).

7. The flower ornamental assembly (1) according to claim 6, further comprising a filler (142) filling a surrounding of the hollow tubular part (140).

## Patentansprüche

1. Zierblumenanordnung (1), die zur Aufnahme eines Blumentopfs (8) ausgebildet ist, in dem Blumen gepflanzt sind, wobei die Zierblumenanordnung Folgendes umfasst:
einen Stützpfosten (2) mit einem unteren Teil, der in dem Boden vergraben oder an dem Boden mit einer Befestigungsvorrichtung befestigt ist, so dass er aufrecht steht;
einen Blumen-Ziertopf (3), der an dem oberen Ende eine Öffnung (3a), die zur Aufnahme des Blumentopfs (8) ausgebildet ist, und an dem unteren Ende eine Durchgangsbohrung (3b) aufweist, durch die hindurch der Stützpfosten (2) eingesteckt wird; **dadurch gekennzeichnet, dass**:
der Blumentopf (8) auf der Öffnung des Blumen-Ziertopfs (3) ruht und mit diesem in Kontakt steht; und
ein ein Kippen verhinderndes Element (4, 11, 140) in dem Blumen-Ziertopf (3) um den Stützpfosten (2) herum angeordnet ist, wenn der Stützpfosten (2) durch die Durchgangsbohrung (3b) in den Zier-Blumentopf (3) eingesetzt ist, um mit dem Stützpfosten (2) zusammenzuwirken, um den Blumen-Ziertopf aufrecht zu halten und zu haltern.

2. Zierblumenanordnung (1) nach Anspruch 1, bei dem das ein Kippen verhindernde Element (4, 11, 140) ein Füllmaterial (4) ist, das eine Umgebung des Stützpfostens (2) im Inneren des Blumen-Ziertopfes (3) füllt.

3. Zierblumenanordnung (1) nach Anspruch 1,
bei dem das ein Kippen verhindernde Element (4, 11, 140) Folgendes einschließt: einen Blockkörper (11) mit einer Durchgangsbohrung (11a) für den Durchtritt des Stützpfostens (2) in der vertikalen Richtung, wobei der Blockkörper um den Stützpfosten (2) herum im Inneren des Blumen-Ziertopfes (3) angeordnet ist und die Neigung des Blumen-Ziertopfes (3) innerhalb eines bestimmten Bereiches definiert; und ein Pufferelement (12), das einen Raum zwischen dem Blockkörper (11), dem Blumen-Ziertopf (3) und dem Stützpfosten (2) füllt.

4. Zierblumenanordnung (1) nach Anspruch 1, die weiterhin ein Höheneinstellstück (21) umfasst, das zwischen dem Blumen-Ziertopf (3) und dem Boden eingefügt ist, um die Höhenposition des Blumen-Ziertopfes (3) einzustellen.

5. Zierblumenanordnung (1) nach Anspruch 1, die weiterhin einen Sockel (301) umfasst, der einstückig mit dem unteren Ende des Blumen-Ziertopfes (3) verbunden ist,
wobei der Sockel (301) einen Hohlraum aufweist, der mit der Durchgangsbohrung (3b) des Blumen-Ziertopfes (3) zum Einsetzen des Stützpfostens (2) in Verbindung steht.

6. Zierblumenanordnung nach Anspruch 1,
bei der das ein Kippen verhindernde Element (4, 11, 140) ein hohler rohrförmiger Teil (140) einstückig mit dem Blumen-Ziertopf (3) ist, wobei der hohle rohrförmige Teil (140) von der Durchgangsbohrung (3b) aus aufrecht angeordnet ist und der Blumen-Ziertopf (3) bei in den rohrförmigen Teil (140) eingesetztem Stützpfosten aufrecht stehend angeordnet und gehaltert ist,

7. Zierblumenanordnung (1) nach Anspruch 6, die weiterhin ein Füllmaterial (142) umfasst, dass den hohlen rohrförmigen Teil (140) umgibt.

## Revendications

1. Ensemble ornemental fleuri (1) adapté pour recevoir un pot de fleur (8) dans lequel des fleurs sont plantées, l'ensemble ornemental fleuri comprenant :
un montant de support (2) présentant une partie inférieure enterrée dans le sol ou fixée au sol par un dispositif de fixation de manière à être dressé vers le haut ;
un pot de fleur ornemental (3) présentant à l'extrémité supérieure une ouverture (3a) adaptée pour recevoir le pot de fleur (8) et présentant à l'extrémité inférieure un trou traversant (3b) à travers lequel le montant de support (2) est inséré ; **caractérisé en ce que** le pot de fleur (8) repose sur l'ouverture du pot de fleur ornemental (3) et est en contact avec celui-ci ; et
un élément anti-inclinaison (4, 11, 140) placé dans le pot de fleur ornemental (3) autour du montant de support (2) lorsque le montant de support (2) est inséré à travers le trou traversant (3b) du pot de fleur ornemental (3) pour coopérer avec le montant de support (2) pour dresser et supporter le pot de fleur ornemental.

2. Ensemble ornemental fleuri (1) selon la revendication 1,
dans lequel l'élément anti-inclinaison (4, 11, 140) est une matière de remplissage (4) remplissant un environnement immédiat du montant de support (2) à l'intérieur du pot de fleur ornemental (3).

3. Ensemble ornemental fleuri (1) selon la revendication 1,
dans lequel l'élément anti-inclinaison (4, 11, 140) comporte : un corps de bloc (11) présentant un trou traversant (11a) destiné à faire pénétrer le montant de support (2) dans la direction verticale, placé autour du montant de support (2) à l'intérieur du pot de fleur ornemental (3), et définissant l'inclinaison du pot de fleur ornemental (3) à l'intérieur d'une plage spécifiée ; et un élément tampon (12) remplissant un espace entre le corps de bloc (11), le pot de fleur ornemental (3), et le montant de support (2).

4. Ensemble ornemental fleuri (1) selon la revendication 1, comprenant en outre une pièce de réglage en hauteur (21) interposée entre le pot de fleur ornemental (3) et le sol destinée à régler la position en hauteur du pot de fleur ornemental (3).

5. Ensemble ornemental fleuri (1) selon la revendication 1, comprenant en outre un socle (301) monté de manière solidaire sur l'extrémité inférieure du pot de fleur ornemental (3),
dans lequel le socle (301) présente un espace creux communiquant avec le trou traversant (3b) du pot de fleur ornemental (3) pour insérer le montant de support (2).

6. Ensemble ornemental fleuri selon la revendication 1 :
dans lequel l'élément anti-inclinaison (4, 11, 140) est une pièce tubulaire creuse (140) solidaire du pot de fleur ornemental (3), la pièce tubulaire creuse (140) dressée vers le haut à partir du trou traversant (3b), et le pot de fleur ornemental (3) étant dressé et supporté par le montant de support (2) inséré dans la pièce tubulaire (140).

7. Ensemble ornemental fleuri (1) selon la revendication 6, comprenant en outre une matière de remplissage (142) remplissant un environnement immédiat de la pièce tubulaire creuse (140).
